# EUROPEAN PATENT APPLICATION

(11) **EP 4 786 251 A1**
(43) Date of publication of application: **05.08.2026**
(21) Application number: 24884006.8
(22) Date of filing: 03.07.2024
(51) Int. Cl.: B60L 15/20, B60W 30/18

(54) **POWER ASSEMBLY HAVING DIFFERENTIAL GEAR PROTECTION FUNCTION, METHOD, AND ELECTRIC VEHICLE**

(30) Priority: 03.11.2023 CN 202311464444
(71) Applicant: Huawei Digital Power Technologies Co., Ltd., Shenzhen, Guangdong 518043 (CN)
(72) Inventor: WANG, Dong, Shenzhen, Guangdong 518043 (CN); FAN, Litao, Shenzhen, Guangdong 518043 (CN); KONG, Weixing, Shenzhen, Guangdong 518043 (CN); DUAN, Guozhao, Shenzhen, Guangdong 518043 (CN)
(74) Representative: Epping - Hermann - Fischer
(86) International application number: PCT/CN2024/103274
(87) International publication number: WO 2025/091998

(57) **Abstract**

A powertrain (30) with a differential protection function, a control method for the powertrain (30), and an electric vehicle (10) are provided. This application relates to the field of new energy vehicles, and may be applied to a pure electric vehicle and a hybrid electric vehicle. The powertrain (30) includes a drive motor (60), a motor control unit (50), and a differential (70). The drive motor (60) is configured to drivingly connect to the differential (70), the differential (70) is configured to drivingly connect to two wheels (12) of the electric vehicle separately, the two wheels (12) are two front wheels or two rear wheels, and the motor control unit (50) is configured to control a torque value output by the drive motor (60) to be less than or equal to a torque limit value, where the torque limit value decreases as a wheel speed difference between the two wheels increases. The differential (70) is protected by using the motor control unit (50) based on a capability and an operating boundary of hardware of the differential (70), thereby improving reliability of the powertrain (30) and improving safety of the vehicle.

## Description

This application claims priority to Chinese Patent Application No. 202311464444.6, filed with the China National Intellectual Property Administration on November 3, 2023 and entitled "POWERTRAIN WITH DIFFERENTIAL PROTECTION FUNCTION, METHOD, AND ELECTRIC VEHICLE", which is incorporated herein by reference in its entirety.

### TECHNICAL FIELD

This application relates to the field of electric vehicles, and more specifically, to a powertrain with a differential protection function, a control method, and an electric vehicle.

### BACKGROUND

A split-friction road surface is a road surface with different adhesion coefficients on both sides of wheels. Traveling performance of a vehicle on the split-friction road surface/ramp may reflect a get-unstuck capability of the vehicle. The performance poses higher technical requirements for pure electric vehicles. Compared with conventional power vehicles, the pure electric vehicles are usually heavier and have a faster dynamic response. Impact further increases due to absence of a clutch. These factors cause a larger speed difference and torque to a vehicle under a split-friction road surface/ramp working condition. This poses a higher requirement on a bearing capability of a differential. An electronic stability program adjusts a torque of the vehicle when the vehicle slips, to improve stability and manipulation performance of the vehicle. However, the bearing capability of the differential is not considered in calibration of the electronic stability program. It is difficult for a current hardware level of the differential in the industry to meet the bearing requirement of the differential caused by medium and large pure electric vehicles under this working condition. Therefore, how to protect the differential under an extreme speed difference or another working condition is an urgent problem to be resolved.

### SUMMARY

This application provides a motor control unit, a control method, a powertrain, and an electric vehicle. The motor control unit implements intelligent protection on a differential based on a capability and an operating boundary of hardware of the differential, and limits an output torque of a drive motor under a working condition of an extreme wheel speed difference, thereby reducing a failure risk of the differential, improving reliability of the powertrain, and improving use safety of the vehicle.

According to a first aspect, this application provides a powertrain for an electric vehicle, where the powertrain includes a drive motor, a motor control unit, and a differential, the drive motor is configured to drivingly connect to the differential, the differential is configured to drivingly connect to two wheels of the electric vehicle separately, the two wheels are two front wheels or two rear wheels, and the motor control unit is configured to: decrease a torque limit value output by the drive motor as a wheel speed difference between the two wheels increases; and control a torque value output by the drive motor to be less than or equal to the torque limit value.

Based on the solution of this application, the motor control unit controls the working condition of the differential based on the capability and the operating boundary of the hardware of the differential, and limits the torque output by the drive motor under the working condition of the extreme speed difference, to protect the differential from a hardware failure caused by an excessively large coupling torque due to an excessively large speed difference. This helps the powertrain implement intelligent protection on the differential. The motor control unit can particularly protect operation of a performance vehicle, a large vehicle, and an off-road vehicle.

In addition, the differential is disposed in the motor control unit for protection, so that signal interaction between a vehicle control unit and the motor control unit can be reduced, a speed of determining a final output torque can be increased, and a delay can be reduced. The motor control unit can improve an intelligent characteristic of the powertrain.

With reference to the first aspect, in some implementations of the first aspect, in response to that the wheel speed difference between the two wheels being a first wheel speed difference, the motor control unit is configured to control the torque value output by the drive motor to be less than or equal to a first limit value, where the first limit value corresponds to the first wheel speed difference; and in response to that the wheel speed difference between the two wheels being a second wheel speed difference, the motor control unit is configured to control the torque value output by the drive motor to be less than or equal to a second limit value, where the second limit value corresponds to the second wheel speed difference, the first wheel speed difference is less than the second wheel speed difference, and the first limit value is greater than the second limit value.

With reference to the first aspect, in some implementations of the first aspect, in response to that a torque indicated by a torque signal being less than or equal to the torque limit value, the motor control unit is configured to control the drive motor to output the torque indicated by the torque signal. In response to that the torque indicated by the torque signal being greater than the torque limit value, the motor control unit is configured to control the torque value output by the drive motor to be equal to the torque limit value.

When the torque value indicated by the torque signal is less than a torque limit value corresponding to a current wheel speed difference, it indicates that the differential runs in a safe state. Therefore, the motor control unit may directly output the torque based on the torque value indicated by the torque signal. However, when the torque value indicated by the torque signal is greater than the torque limit value corresponding to the current wheel speed difference, if the motor control unit directly outputs the torque based on the torque value indicated by the torque signal, and the torque value output by the drive motor is greater than the torque limit value corresponding to the current wheel speed difference, the differential is damaged. Therefore, the motor control unit is configured to control the torque value output by the drive motor to be equal to the torque limit value. In other words, in this case, the torque value actually output by the motor control unit is less than the torque value indicated by the torque signal.

With reference to the first aspect, in some implementations of the first aspect, the motor control unit is configured to: receive a torque signal and output a torque value indicated by the torque signal. In response to that the torque value output by the drive motor being greater than the torque limit value, the motor control unit is configured to control the drive motor to reduce the output torque value to be less than or equal to the torque limit value.

With reference to the first aspect, in some implementations of the first aspect, in a process in which the motor control unit is configured to control the drive motor to reduce the output torque value, the torque value indicated by the torque signal is greater than the torque value output by the drive motor.

For example, when an electric vehicle starts to travel on a normal road surface, a wheel speed difference between two wheels is small, and the drive motor outputs a large torque. Then, the electric vehicle suddenly passes through a split-friction road surface. In this case, although the torque value indicated by the torque signal is still large, the motor control unit actively reduces the torque value output by the drive motor to be less than or equal to the torque limit value to protect safety of the differential. In this process, the torque value indicated by the torque signal is greater than the torque value output by the drive motor.

With reference to the first aspect, in some implementations of the first aspect, if the torque value indicated by the torque signal is less than the torque limit value, the motor control unit is configured to: receive the torque signal, and control the drive motor to output the torque value indicated by the torque signal.

If the torque value indicated by the torque signal is less than the torque limit value, it indicates that if the drive motor outputs the torque value indicated by the current torque signal, the differential can be in a safe state. Therefore, the motor control unit may directly output the torque value according to the indication of the torque signal.

With reference to the first aspect, in some implementations of the first aspect, in response to that the wheel speed difference between the two wheels being less than a preset third wheel speed difference, the motor control unit is configured to control the drive motor to output the torque value indicated by the torque signal.

The third wheel speed difference is a small wheel speed difference. In other words, if the wheel speed difference between the two wheels is less than the preset third wheel speed difference, it may be considered that the differential is in a safe state in this case. In other words, under the current wheel speed difference, the differential can bear any torque output by the drive motor. In this case, the motor control unit may control the drive motor to output the torque value indicated by the torque signal without considering the torque limit value. For example, the third wheel speed difference may be 50 rpm.

With reference to the first aspect, in some implementations of the first aspect, the motor control unit includes an inverter circuit and a control apparatus, the control apparatus includes a storage unit, the storage unit is configured to store a plurality of wheel speed differences and a plurality of torque limit values, and the wheel speed differences are in one-to-one correspondence with the torque limit values.

The wheel speed differences and the torque limit values in the storage unit are used to calibrate a working limit of the differential. In other words, test calibration is performed on the differential, and torque limit values that can be borne by the differential under different speed differences are calibrated, to obtain correspondences between the wheel speed differences and the torque limit values, and then a plurality of wheel speed differences and a plurality of corresponding torque limit values are stored in the storage apparatus.

With reference to the first aspect, in some implementations of the first aspect, in response to that the wheel speed difference between the two wheels being less than or equal to a fourth wheel speed difference, the motor control unit is configured to control, based on the torque signal from a vehicle control unit, the drive motor to output a torque. In response to that the wheel speed difference between the two wheels being greater than the fourth wheel speed difference, the motor control unit is configured to control, based on the torque signal from a traction control system, the drive motor to output a torque. The fourth wheel speed difference is less than the first wheel speed difference and greater than the third wheel speed difference.

The fourth wheel speed difference may be a threshold for triggering control by an electronic stability program. In other words, when the wheel speed difference between the two wheels is less than or equal to the preset fourth wheel speed difference, the electric vehicle runs in a stable state, the vehicle control unit is configured to perform torque control, and the motor control unit controls, according to an indication of the vehicle control unit, the drive motor to output a torque. However, when the wheel speed difference between the two wheels is greater than the preset fourth wheel speed difference, it indicates that the electric vehicle runs in an unstable state. The electronic stability program is configured to perform torque control. The motor control unit controls, according to an indication of the traction control system in the electronic stability program, the output torque of the drive motor, to control a speed-differentiating state of the wheels on both sides, thereby improving manipulation stability of the vehicle.

With reference to the first aspect, in some implementations of the first aspect, the torque signal is determined by the vehicle control unit based on a travel of a drive pedal or a brake pedal, or the torque signal is determined by the traction control system based on a motion state of the electric vehicle.

With reference to the first aspect, in some implementations of the first aspect, a wheel speed sensor is disposed on each of the two wheels, and the motor control unit is configured to receive rotation speed signals sent by the wheel speed sensors, where the rotation speed signal indicates a rotation speed difference between the two wheels.

According to a second aspect, this application provides a control method for a powertrain, where the powertrain includes a drive motor, a motor control unit, and a differential, the drive motor is configured to drivingly connect to the differential, the differential is configured to drivingly connect to two wheels of an electric vehicle separately, the two wheels are two front wheels or two rear wheels, and in a traveling process of an electric vehicle, the control method includes: in response to that the wheel speed difference between the two wheels being a first wheel speed difference, controlling the output torque of the drive motor to be less than or equal to a first limit value, where the first limit value corresponds to the first wheel speed difference; and in response to that the wheel speed difference between the two wheels increasing from the first wheel speed difference to a second wheel speed difference, controlling the torque output by the drive motor to be reduced to be less than or equal to a second limit value, where the second limit value corresponds to the second wheel speed difference, the first wheel speed difference is less than the second wheel speed difference, and the first limit value is greater than the second limit value.

With reference to the second aspect, in some implementations of the second aspect, the torque value output by the drive motor is controlled to be less than or equal to the torque limit value, where the torque limit value decreases as the wheel speed difference between the two wheels increases.

According to a third aspect, an electric vehicle is provided. The electric vehicle includes wheels, wheel speed sensors, a traction control system, a vehicle control unit, and the powertrain in the first aspect. The wheel speed sensor is configured to detect a rotation speed of the wheel. The motor control unit is configured to receive a rotation speed signal sent by the wheel speed sensor. The vehicle control unit is configured to: receive a travel signal of an acceleration pedal and output a torque signal to the motor control unit based on a torque value indicated by the travel signal. The traction control system is configured to output the torque signal to the motor control unit.

Specifically, for beneficial effects of another aspect, refer to beneficial effects described in the first aspect. Details are not described herein again.

### BRIEF DESCRIPTION OF DRAWINGS

FIG. 1 is a diagram of a differential according to an embodiment of this application;
FIG. 2 is a diagram of an electric vehicle according to an embodiment of this application;
FIG. 3 is a diagram of a motor control unit according to an embodiment of this application;
FIG. 4 is a diagram of a control procedure of a motor control unit according to an embodiment of this application;
FIG. 5 is a diagram of a torque limit value curve of a differential according to an embodiment of this application;
FIG. 6 is a diagram of a running condition in a possible scenario according to an embodiment of this application;
FIG. 7 is a diagram of a running condition in another possible scenario according to an embodiment of this application; and
FIG. 8 is a diagram of a motor control method according to an embodiment of this application.

### DESCRIPTION OF EMBODIMENTS

The following describes the technical solutions of this application with reference to the accompanying drawings. Detailed descriptions and accompanying drawings of the following embodiments are used to describe principles of this application as examples, but cannot be used to limit the scope of this application. In other words, this application is not limited to the described embodiments.

With the wide popularization and application of electric vehicles, vehicle manipulation performance and vehicle safety have attracted attention of people. Compared with conventional power vehicles, pure electric vehicles are usually heavier, have a faster dynamic response, and have larger impact. These factors cause a larger speed difference and torque to a vehicle under a split-friction road surface/ramp working condition. This poses a higher requirement on a bearing capability of a differential.

The differential is a differential transmission mechanism that enables left and right (or front and rear) drive wheels to rotate at different rotation speeds. This ensures power transmission of each drive wheel under various motion conditions and prevents tire slippage on the ground. The differential mainly includes left and right side gears, two planetary gears, and a gear carrier. The differential is characterized by "speed differentiation with torque equality". In other words, although the rotation speeds of the left and right drive wheels are different, drive torques transferred to the two drive wheels are the same.

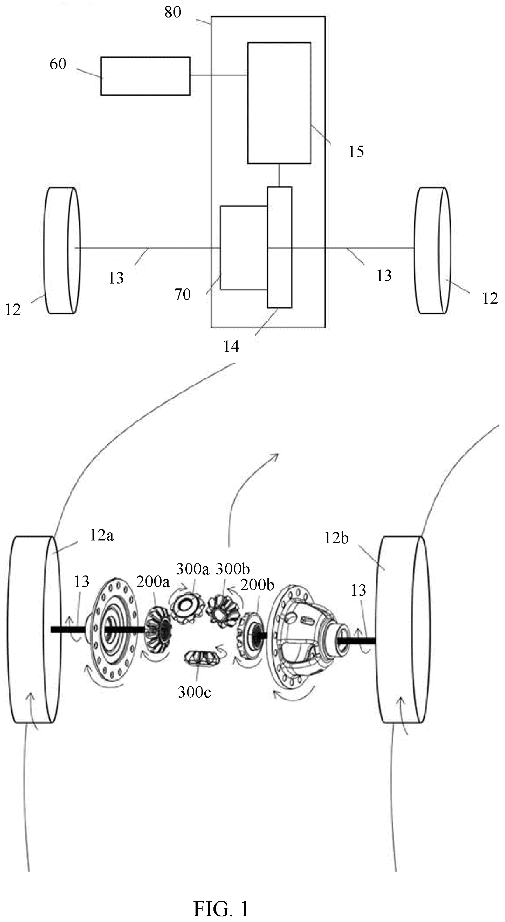

FIG. 1 is a diagram of a differential according to an embodiment of this application. As shown in FIG. 1, an electric vehicle 10 may include wheels 12 and wheel drive half-shafts 13 that are mounted on the body. A differential 70 is drivingly connected to the wheel drive half-shaft 13, the wheel 12 is drivingly connected to the wheel drive half-shaft 13, and power generated by a powertrain 30 can be sequentially transferred to the wheel drive half-shaft 13 and the wheel 12, so that the vehicle travels. The differential 70 can enable the left and right (or front and rear) wheel drive half-shafts 13 to rotate at different rotation speeds, so that the left and right (or front and rear) wheels 12 rotate at different rotation speeds. When the electric vehicle 10 turns or travels on a split-friction road surface, the left and right (or front and rear) wheels 12 roll at different rotation speeds, to ensure that the wheels 12 perform pure rolling motion. The powertrain 30 includes a drive motor 60, a main reduction gear 14, and the differential 70. The main reduction gear 14 is fastened to a housing of the differential 70, and the drive motor 60 is drivingly connected to the main reduction gear 14, to provide power for the main reduction gear 14. The powertrain 30 further includes a speed reducer 80. A gear assembly 15 in the speed reducer 80 receives power transmitted by the drive motor 60 and transfers the power to the main reduction gear 14.

When the electric vehicle 10 turns right, a rotation speed of a left side gear 200a is greater than a rotation speed of a right side gear 200b, and a resistance difference between a left wheel 12a and a right wheel 12b enables a planetary gear 300a to rotate clockwise, a planetary gear 300b to rotate counter-clockwise, and a planetary gear 300c to rotate counter-clockwise, so that the left side gear 200a and the right side gear 200b can rotate at different speeds, the left wheel 12a rotates faster than the right wheel 12b, and the electric vehicle 10 turns smoothly.

Most electric vehicles have single-stage speed reducers, and have no clutch to attenuate torque impact in the powertrain. Under a working condition of a split-friction ramp, a speed difference of the differential increases. In addition, due to a gradability requirement, a particular torque needs to be maintained in a transmission system, and a bearing requirement for the differential is further increased compared with that of a conventional vehicle. Under this working condition, the root cause of a failure of the differential is that a friction pair between a planetary gear and a planetary shaft inside the differential cannot bear a PV requirement brought by medium and large pure electric vehicles under an extreme split-friction working condition. As a result, an oil film is damaged during operating, metal-to-metal friction occurs, and molten bonding between the planetary gear and a sub-shaft is generated, causing a gluing failure. However, it is difficult for a current hardware level of the differential in the industry to meet the bearing requirement of the differential caused by medium and large pure electric vehicles under this working condition. If there is no effective management and control, a series of serious consequences such as burning, an insulation failure, and power loss will occur on the differential.

An electronic stability program (electronic stability program, ESP) is an active intervention safety system used in an urgent case that prevents a vehicle from slipping, to avoid out-of-control, overturning, over-steering or under-steering, so that manipulation performance and traveling safety of the vehicle can be improved. The ESP usually includes parts such as a central control unit, a steering sensor, a wheel rotation speed sensor, a lateral acceleration sensor, a lateral slip sensor, and an execution apparatus. These sensors are responsible for sensing a state of the vehicle body and transmitting data to the control unit. Once the vehicle is about to be out of control, the control unit immediately controls the execution mechanism to help the vehicle to reach a stable state. The ESP includes a traction control system (traction control system, TCS), configured to: control a pure electric vehicle, and manage and control manipulation stability of the vehicle. The ESP (TCS) sends a signal to a vehicle control unit (vehicle control unit, VCU). After the VCU receives the signal, a motor control unit (motor control unit, MCU) reduces a torque through coordinated control of an output torque of an engine or a drive motor and wheel cylinder pressure. In addition, the MCU outputs a braking requirement to a braking system to control a speed-differentiating state of the wheels on both sides, thereby improving manipulation stability of the vehicle.

It should be understood that, in a chassis TCS calibration process, more attention is usually paid to overall vehicle performance. In a scenario in which a high bearing requirement is posed on a differential, such as a split-friction road surface and a split-friction ramp, only a requirement for manipulation stability is usually considered in the TCS calibration process, and when the drive motor is controlled to output a torque, load of the differential is not considered. This makes the differential prone to burning and failure.

Based on the foregoing problem, this application provides a motor control unit, a motor control method, a powertrain, and an electric vehicle. The motor control unit implements intelligent protection on a differential based on a capability and an actual operating boundary condition of hardware of the differential, to improve reliability of the powertrain, thereby ensuring use safety of the vehicle.

In the descriptions of this application, it should be noted that, unless otherwise clearly specified and limited, the terms "dispose", "mount", "connected", and "connection" should be understood in a broad sense, for example, may be a fixed connection, a detachable connection, or an integral connection; or may be a direct connection, or may be an indirect connection performed by using an intermediate medium. A person of ordinary skill in the art may understand specific meanings of the foregoing terms in this application based on specific situations. The term "include" used in this application should not be construed as being limited to the content listed below, and does not exclude other elements or steps. Therefore, it should be interpreted as specifying existence of a mentioned feature, whole, step, or component, but not excluding existence or addition of one or more other features, wholes, steps, or components and a group thereof. Therefore, the expression "device including apparatuses A and B" should not be limited to device consisting of only components A and B.

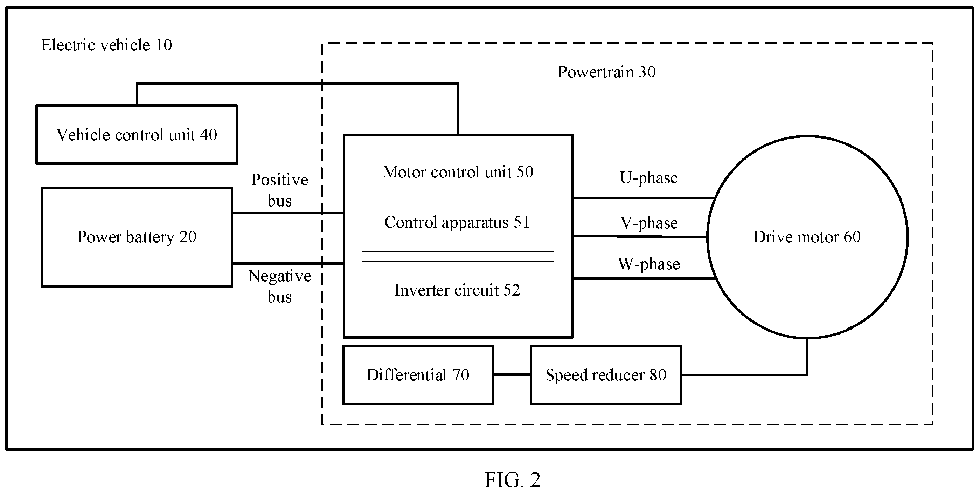

FIG. 2 is a diagram of an electric vehicle according to an embodiment of this application. As shown in FIG. 2, the electric vehicle 10 includes a power battery 20, a powertrain 30, and a vehicle control unit 40. The vehicle control unit 40 may send instructions to the powertrain 30, to control the vehicle to run or perform operations such as heating. The powertrain 30 is configured to drive the electric vehicle 10. The powertrain 30 includes a motor control unit 50, a drive motor 60, and a differential 70. The motor control unit 50 includes a control apparatus 51 and an inverter circuit 52, where the inverter circuit 52 may be a control circuit formed by using an insulated gate bipolar transistor (insulated gate bipolar transistor, IGBT), and an on/off control signal of the IGBT in the control circuit is provided by the control apparatus 51. Using control on a three-phase motor as an example, an inverter control circuit is formed by using six IGBTs, a direct current at a battery end is converted into a three-phase alternating current, and the three-phase alternating current is separately provided to three-phase windings of the three-phase motor, to control a rotation speed or torque output of the three-phase motor. The differential 70 is drivingly connected to the drive motor 60. The differential 70 is further drivingly connected to a left wheel and a right wheel of the electric vehicle 10 separately. The differential 70 receives a torque output by the drive motor 60, and transfers the torque to the left wheel and the right wheel separately.

The power battery in this embodiment of this application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. This is not limited herein. In terms of a scale, the power battery 20 in this embodiment of this application may be a cell, or may be a battery module or a battery pack. This is not limited herein. In terms of an application scenario, the power battery 20 may be used in a power apparatus such as an automobile or a ship. For example, the power battery 20 may be used in a power vehicle, to supply power to a motor of the power vehicle, and serve as a power source of the electric vehicle. The power battery 20 may further supply power to another electrical component in the electric vehicle, for example, an in-vehicle air conditioner or in-vehicle player.

This application is mainly applied to a running state of an electric vehicle in an extreme scenario. The electric vehicle 10 may be specifically any one of different types of vehicles such as a car, a truck, and a passenger bus, or may be a conveying apparatus for carrying people or goods such as a tricycle, a two-wheeled vehicle, or a train, or another type of transportation means driven by a power battery. The electric vehicle 10 includes but is not limited to a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), and the like.

The extreme scenario is a scenario in which a rotation speed difference between left and right wheels of a vehicle is excessively large and a required torque is excessively large in a split-friction road surface/ramp or get-unstuck scenario. For example, the split-friction ramp may be a scenario in which one side is a low-adhesion road surface (for example, an iced road surface or a water-sprayed ceramic tile road), the other side is a high-adhesion road surface (for example, a common asphalt road surface or a bitumen road surface), and a vehicle needs to travel through the ramp. For another example, the vehicle is in a difficult situation, and wheels slip. As a result, the left and right wheels rotate at a large rotation speed, and a large torque is required to pull the vehicle out of the difficult situation.

The motor control unit 50 in this embodiment of this application includes the inverter circuit 52 and the control apparatus 51, the inverter circuit 52 is formed by using the IGBTs, and the on/off control signal of the IGBT in the inverter circuit 52 is provided by the control apparatus 51. Using control on a three-phase motor as an example, the inverter circuit 52 is formed by using six IGBTs, a current in the power battery 20 is fed into the drive motor 60, and the current is separately provided to the three-phase windings of the three-phase motor, to control a rotation speed or torque output of the three-phase motor.

An embodiment of this application provides a powertrain 30.

The powertrain 30 includes a drive motor 60, a motor control unit 50, a speed reducer 80, and a differential 70.

The drive motor 60 is configured to drivingly connect to the differential 70. The differential is configured to drivingly connect to two wheels of an electric vehicle separately. The two wheels are two front wheels or two rear wheels. For example, the differential is configured to drivingly connect to a left wheel and a right wheel of the electric vehicle 10 separately. The differential 70 is configured to: receive a torque output by the drive motor 60 and transfer the torque to the left wheel and the right wheel in the two wheels separately.

The motor control unit 50 is configured to control the drive motor 60 to output a torque, where the torque is transferred to the left wheel and the right wheel separately through the differential 70.

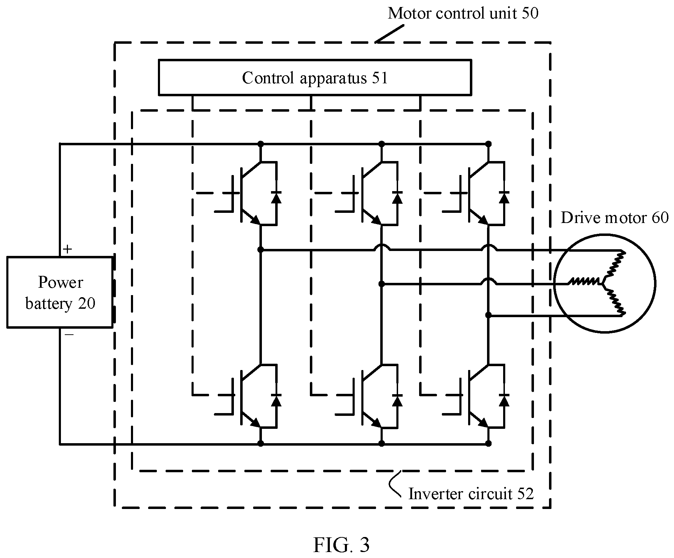

As shown in FIG. 3, the motor control unit 50 includes a control apparatus 51 and an inverter circuit 52. The inverter circuit 52 includes three-phase bridge arms connected in parallel. One end of each phase of bridge arm is configured to connect to a positive electrode of a power battery 20, the other end of each phase of bridge arm is configured to connect to a negative electrode of the power battery 20, and a midpoint of each phase of bridge arm is configured to connect to one phase of winding in three-phase stator windings of the drive motor 60. The inverter circuit 52 is configured to output a drive current to the drive motor 60, to drive the drive motor 60 to output a torque, where the torque is transferred to a wheel through the differential.

The control apparatus 51 is configured to control the inverter circuit 52 to output a drive current, where the drive current is used to control the drive motor 60 to output a torque.

Power of the drive motor 60 enters the differential, directly drives a housing of the differential, and drives a planetary gear shaft. Through meshing between planetary gears and side gears, the power is distributed to the left and right side gears to drive left and right drive wheels of the vehicle. The input torque is evenly distributed to the left and right side gears through the foregoing system, and a sum of rotation speeds of the left and right side gears is equal to a rotation speed on the housing of the differential. Therefore, when the vehicle travels straight, the left and right side gears and the housing of the differential are in a relatively balanced state, and the entire differential forms an overall transmission power. When the vehicle turns or slips, a rotation speed of an outer wheel increases or the outer wheel slips, and a vehicle speed of an inner wheel decreases relatively.

When the vehicle starts on a split road surface, a drive wheel on a low-adhesion road surface first reaches an adhesion limit. As a result, drive force of an entire drive shaft is affected by the low-adhesion road surface. Drive force of a high-adhesion side is equal to a drive moment of the low-adhesion side road surface. Consequently, a drive moment transferred to the high-adhesion side is limited, and the vehicle cannot start due to insufficient drive force.

In a possible scenario, when the vehicle travels normally, if the vehicle suddenly enters a road/ramp from a normal road surface, high-adhesion and low-adhesion road surfaces occur, and a wheel on the low-adhesion road surface side slips.

In this scenario, an actual torque output by the drive motor may be a result of a joint action of an electronic stability program and a differential protection module of the motor control unit 50. The motor control unit 50 limits a torque output capability of the drive motor 60 based on a working state of the differential and a capability of the differential. The actual torque output by the drive motor 60 is a smaller value of a torque required by a TCS (that is, a torque value indicated by a torque signal) and a torque limit value limited by the motor control unit 50.

In a possible implementation, in response to that a wheel speed difference between two wheels being less than or equal to a preset fourth wheel speed difference, the motor control unit 50 receives a torque signal output by a vehicle control unit 40.

In a possible implementation, in response to that the wheel speed difference between the two wheels being greater than the preset fourth wheel speed difference, the motor control unit 50 receives a torque signal output by the traction control system TCS.

The fourth wheel speed difference may be a threshold for triggering control by the electronic stability program (TCS). The TCS sends a signal to the vehicle control unit 40. After receiving the signal, the VCU controls the drive motor to reduce a torque, and outputs a braking requirement to a braking system at the same time, to control a speed-differentiating state of the wheels on both sides, thereby improving manipulation stability of the vehicle. A specific setting of the fourth wheel speed difference is not limited in this application.

The motor control unit 50 is configured to obtain a torque signal from the vehicle control unit 40 or the traction control system TCS. The torque signal is determined by the vehicle control unit based on a travel of a drive pedal or a brake pedal, or is determined by the traction control system TCS based on a motion state of the electric vehicle. The torque signal indicates a torque value determined by the vehicle control unit or the traction control system TCS.

The motor control unit 50 is configured to obtain a rotation speed signal, where the rotation speed signal includes a rotation speed of a left wheel and a rotation speed of a right wheel, or the rotation speed signal includes a wheel speed difference between the left wheel and the right wheel. The rotation speeds of the left and right wheels may be obtained by using a sensor. A manner of obtaining the rotation speeds of the wheels is not limited in this application.

In a possible implementation, a wheel speed sensor is disposed on each of the two wheels, and the motor control unit 50 is configured to receive rotation speed signals sent by the wheel speed sensors, where the rotation speed signal indicates a rotation speed difference between the two wheels.

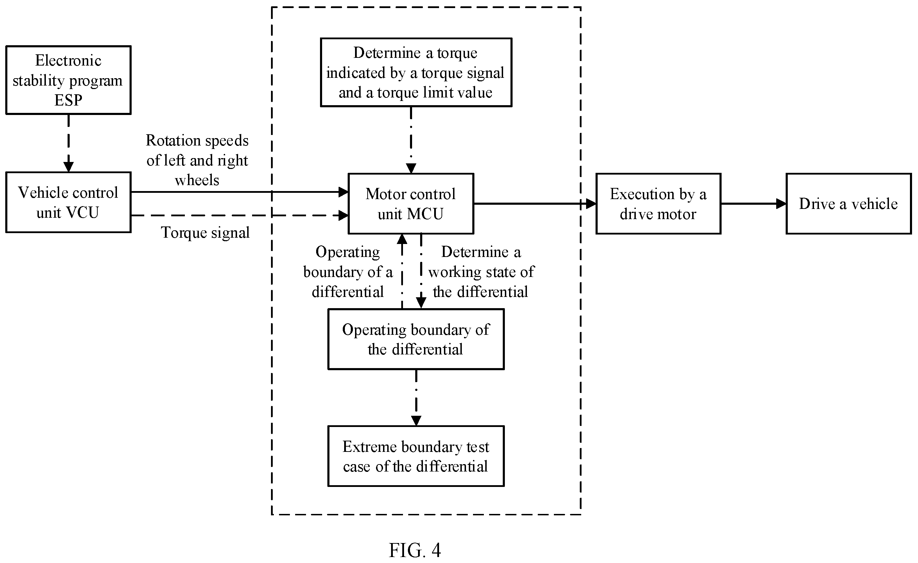

As shown in FIG. 4, each wheel speed sensor transmits an acquired signal to the vehicle control unit 40, and after the signal is processed by the vehicle control unit 40, a speed and an acceleration of each drive wheel are obtained. A rotation speed signal and a steering wheel angle signal of each wheel are sent to the motor control unit 50 through the vehicle control unit 40. When the wheel speed difference reaches a threshold, the TCS in the ESP system needs to manage and control the vehicle. The TCS sends a signal to the vehicle control unit 40. After the vehicle control unit 40 receives the signal, the motor control unit 50 controls the drive motor 60 to reduce a torque, or outputs a braking requirement to the braking system, to control a speed-differentiating state of the wheels on both sides, thereby improving manipulation stability of the vehicle.

In a possible implementation, in response to that the wheel speed difference between the two wheels being less than a preset third wheel speed difference, the motor control unit 50 is configured to control the drive motor to output a torque value indicated by a torque signal.

When the wheel speed difference between the two wheels is very small and no wheel speed difference is obtained, the differential does not need to be protected, and the third wheel speed difference may be a small value.

In a possible implementation, in response to that a torque indicated by a torque signal being less than or equal to the torque limit value, the motor control unit 50 is configured to control the drive motor to output the torque indicated by the torque signal.

When the torque that is indicated by the torque signal and that is determined by the TCS is less than or equal to a torque that can be borne by the capability of the differential, the differential protection module of the motor control unit 50 may be in a permanently disabled state, and the torque output by the drive motor 60 is the torque required by the TCS.

It should be understood that, in a TCS calibration process, only a requirement for manipulation stability is usually considered, and load of the differential is not considered when the torque output by the drive motor 60 is determined. In other words, the torque that is indicated by the torque signal and that is determined by the TCS may exceed a bearing capability of the differential. This makes the differential prone to burning and failure, affecting driving safety.

When the torque determined by the TCS is greater than the torque that can be borne by the capability of the differential, the differential protection module of the motor control unit 50 is triggered, and the motor control unit 50 obtains an operating boundary of the differential 70. The operating boundary may be an extreme boundary obtained by testing the differential. The motor control unit 50 determines the torque indicated by the torque signal and the torque that can be borne by the differential.

The motor control unit 50 is configured to control the torque value output by the drive motor to be less than or equal to the torque limit value, where the torque limit value decreases as the wheel speed difference between the two wheels increases.

In a possible implementation, in response to that the torque value output by the drive motor 60 being greater than the torque limit value, the motor control unit 50 is configured to control the drive motor to reduce the output torque value to be less than or equal to the torque limit value.

In a possible implementation, the motor control unit 50 is configured to: in response to that the wheel speed difference between the two wheels being a first wheel speed difference, control the torque value output by the drive motor 60 to be less than or equal to a first limit value; and in response to that the wheel speed difference between the two wheels being a second wheel speed difference, control the torque value output by the drive motor 60 to be less than or equal to a second limit value, where the first wheel speed difference is less than the second wheel speed difference, and the first limit value is greater than the second limit value.

For example, when the wheel speed difference between the left wheel and the right wheel of the electric vehicle 10 is the first wheel speed difference, in response to that the torque value indicated by the torque signal being greater than the first limit value, where the first limit value corresponds to the first wheel speed difference, the control apparatus 51 controls the inverter circuit 52 to output a current, where the current controls the torque value output by the drive motor 60 to be less than or equal to the torque limit value. In this case, the torque limit value is less than the torque value indicated by the torque signal.

In a possible implementation, the motor control unit 50 is configured to: in response to that the torque indicated by the torque signal being greater than the torque limit value, control the torque value output by the drive motor to be equal to the torque limit value.

The motor control unit 50 responds to that the torque value indicated by the torque signal is greater than the torque limit value, and the control apparatus 51 controls the inverter circuit 52 to output a current, so that the motor control unit 50 controls the drive motor 60 to output the torque limit value.

The torque limit value is determined by conditions such as a design scheme of the differential and a working state of the differential in the powertrain.

In a possible implementation, the control apparatus 51 includes a storage unit, the storage unit is configured to store a plurality of wheel speed differences and a plurality of torque limit values, and the wheel speed differences are in one-to-one correspondence with the torque limit values.

In a possible implementation, the motor control unit 50 is configured to: in response to that the torque value output by the drive motor 60 being greater than the torque limit value, control the drive motor 60 to reduce the output torque value to be less than or equal to the torque limit value. In a process of controlling the drive motor 60 to reduce the output torque value, the torque value indicated by the torque signal is greater than the torque value output by the drive motor.

When the wheel speed difference of the electric vehicle increases to make the torque value output by the drive motor to be greater than the torque limit value corresponding to the wheel speed difference, the motor control unit 50 is configured to control the torque value output by the drive motor to decrease to a range of being less than or equal to the torque limit value. In a control process, the output torque does not exceed the torque value indicated by the torque signal.

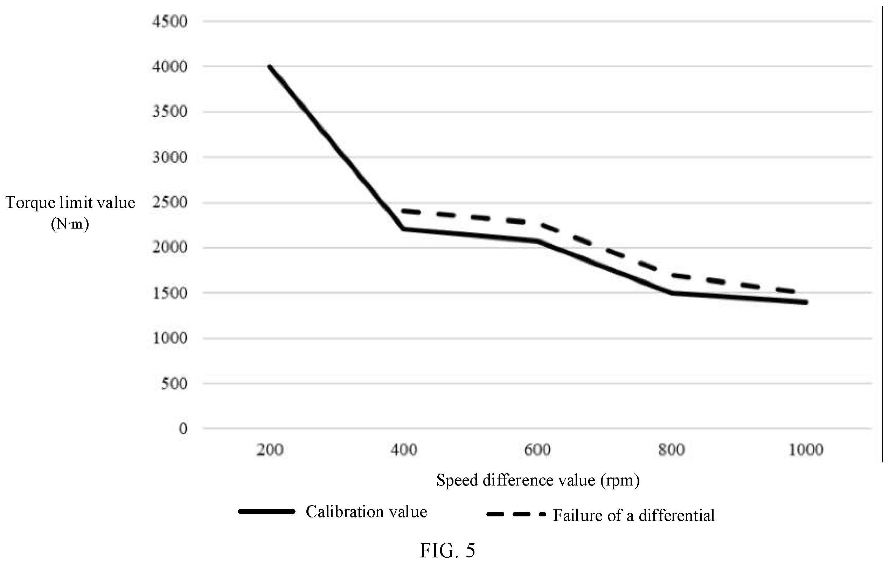

As shown in FIG. 5, correspondences between wheel speed differences and torque limit values are shown by a curve in the figure. Torque limit values that can be correspondingly borne by the differential under different speed difference values may be obtained in a manner such as calculation, calibration, or the like. Within a torque value range of a calibrated value, the differential protection module of the MCU 50 may be in a disabled state or a non-triggered state. It should be understood that the calibration curve in FIG. 5 is merely an example. A specific value varies based on the capability of the differential, a state of the vehicle, and the like. The values in FIG. 5 are merely a possible case provided in this embodiment of this application.

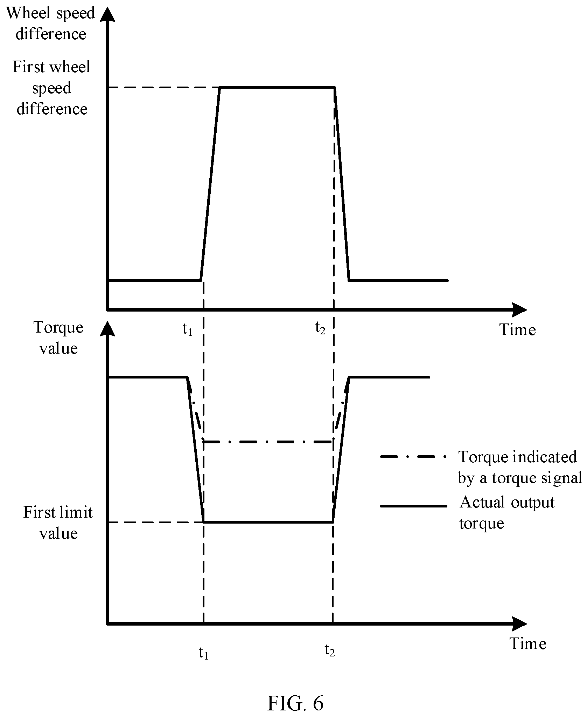

For example, as shown in FIG. 6, the electric vehicle first travels normally, a wheel speed difference between the left wheel and the right wheel is small or 0, the torque indicated by the torque signal is consistent with an actual output torque, and the electric vehicle keeps stable. When the vehicle enters a road/ramp from a normal road surface at a moment t₁, high-adhesion and low-adhesion road surfaces occur, a wheel on the low-adhesion road surface side slips, and the wheel speed difference between the left wheel and the right wheel increases. A wheel sensor transmits an acquired signal to the vehicle control unit 40, and the TCS determines to reduce a torque based on a wheel running state of the vehicle, and indicates, to the motor control unit 50, a torque signal obtained after the torque is reduced. The motor control unit 50 obtains rotation speeds of the left wheel and the right wheel or a signal of a wheel speed difference between the left wheel and the right wheel from the vehicle control unit 40. The motor control unit 50 obtains a current wheel speed difference between the left wheel and the right wheel of the electric vehicle as the first wheel speed difference. The MCU 50 determines, based on an operating boundary of the differential, that a borne torque value calibrated by the differential under the first wheel speed difference is the first limit value. The motor control unit 50 performs determining based on the torque that is indicated by the torque signal and that is determined by the TCS and the torque limit value that can be borne by the differential.

For example, when the wheel speed difference between the left wheel and the right wheel is 600 rpm, that is, the first wheel speed difference is 600 rpm, it can be learned from FIG. 5 that the torque limit value calibrated based on the capability of the differential under the first wheel speed difference is 2000 N·m, that is, the first limit value corresponding to the first wheel speed difference is 2000 N·m. When the torque indicated by the torque signal received by the motor control unit 50 is less than or equal to 2000 N·m, the differential does not need to be protected, that is, the differential protection module of the motor control unit 50 may not be triggered. When the torque indicated by the torque signal is greater than 2000 N·m, in response to that the torque value indicated by the torque signal being greater than the torque limit value, the inverter circuit 52 is controlled to output a current to the drive motor 60, so that the drive motor 60 outputs the first limit value 2000 N·m corresponding to the first wheel speed difference in this case. In this way, the differential still works within a range that can be borne.

In this case, the wheel speed difference of the vehicle may remain unchanged, or may decrease, or may increase. The wheel speed difference actually exists, and is affected by a traveling status of the vehicle and a road surface status. A change of the wheel speed difference in the extreme case is not limited in this application.

The drive motor 60 outputs the torque limit value under control of the MCU 50, and drives the vehicle, so that the vehicle can travel normally. When the vehicle returns to the normal road surface at a moment t₂, the wheels no longer slip, the differential protection module of the MCU 50 is disabled, and the vehicle continues to run normally. In response to that the wheel speed difference between the two wheels being less than the preset third wheel speed difference, the torque output by the drive motor 60 is equal to torque indicated by the torque signal.

The torque limit value is a torque calibrated based on the capability of the differential, and the torque limit value is less than or equal to an extreme torque value that can be borne by the differential under the wheel speed difference. The torque limit value decreases as the wheel speed difference increases.

In another possible scenario, when the vehicle is stuck in a difficult situation, for example, wheels of the vehicle are stuck in a swamp or sand, the wheels slip.

In this state, the vehicle switches a driving mode to a get-unstuck mode. The vehicle control unit 40 may determine, based on a wheel running state of the vehicle, to start the get-unstuck mode, or the get-unstuck mode may be a running mode preset by the vehicle, and is started by the driver by using a button or the like.

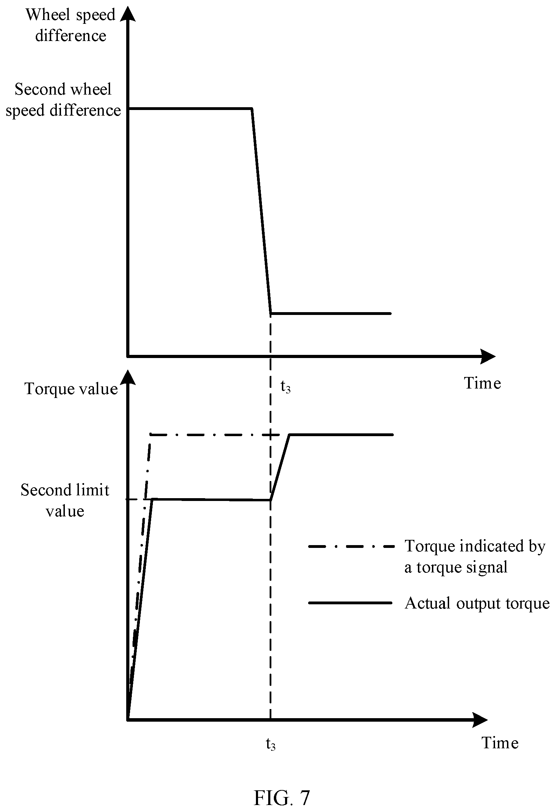

For example, as shown in FIG. 7, when the vehicle is in a difficult situation or in a get-unstuck process, the wheels slip and cannot move forward, and the wheel speed difference between the left wheel and the right wheel is the first wheel speed difference. It is easily thought of that, in this case, the driver expects the vehicle to travel out of the difficult situation, and therefore steps down a drive pedal or a brake pedal. After receiving a signal of the drive pedal or the brake pedal, the VCU 40 determines, based on a travel of the drive pedal or the brake pedal, a torque signal required by the current driver, and then the vehicle control unit 40 transmits the requirement to the motor control unit 50 by using the torque signal. After obtaining the wheel speeds of the left wheel and the right wheel or the signal of the wheel speed difference, the motor control unit 50 compares a stored working state of the differential with an extreme boundary test case of the differential. The MCU 50 determines, based on the extreme boundary test case of the differential, a torque limit value corresponding to the first wheel speed difference. The torque limit value is also a current maximum torque capability of the powertrain 30. The motor control unit 50 performs determining based on the torque that is indicated by the torque signal and that is determined by the vehicle control unit 40 and the torque (that is, the torque limit value) borne by the differential.

For example, when the wheel speed difference between the left wheel and the right wheel is 800 rpm, that is, the second wheel speed difference is 800 rpm, it can be learned from FIG. 5 that the torque calibrated based on the capability of the differential under the second wheel speed difference is 1500 N·m, that is, the second limit value corresponding to the first wheel speed difference is 1500 N·m. When the torque indicated by the torque indication signal received by the motor control unit 50 is less than or equal to 1500 N·m, the differential does not need to be protected, that is, the differential protection module of the motor control unit 50 may not be triggered, and a torque required by the current driver may be directly output. When the torque indicated by the torque signal is greater than 1500 N·m, in response to that the torque value indicated by the torque signal being greater than the torque limit value, the inverter circuit 52 is controlled to output a current to the drive motor 60, so that the drive motor 60 outputs the second limit value 1500 N·m corresponding to the first wheel speed difference. In this way, the differential still works within a range that can be borne.

The drive motor 60 outputs, under control of the motor control unit 50, the torque limit value corresponding to the first wheel speed difference, to drive the vehicle. The torque is transferred to the wheel through the differential, and the vehicle gets unstuck at a moment t₃. When the vehicle returns to the normal road surface at the moment t₃, the wheels no longer slip, the differential protection module of the motor control unit 50 is disabled, and the vehicle continues to run normally with the torque required by the driver.

It should be understood that the curves of the wheel speed differences and the torques in FIG. 6 and FIG. 7 are merely examples, and represent possible change trends. Actual possible values are not limited in this application.

It can be learned from the foregoing that a priority of differential protection control performed by the motor control unit 50 is higher than that of torque signal control determined by the TCS system and the vehicle control unit 40. It is easily understood that, in the foregoing running scenario, the differential of the vehicle does not need to fail for the purpose of getting unstuck, and there is also a method such as waiting for rescue to make the vehicle get unstuck. Therefore, the torque limit value that corresponds to the wheel speed difference and that is determined by the motor control unit 50 for protecting the differential is a maximum value boundary of the actual output torque of the drive motor 60.

Based on the solution of this application, the motor control unit 50 controls the extreme boundary of the differential, so that the differential is protected from a hardware failure caused by an excessively large coupling torque due to an excessively large speed difference, and this is conducive to intelligent protection of the differential by the powertrain 30. The motor control unit 50 can particularly protect running of a performance vehicle, a large vehicle, and an off-road vehicle.

In addition, the differential protection module is disposed in the motor control unit 50, so that signal interaction between the vehicle control unit 40 and the motor control unit 50 can be reduced, and fast closed-loop of determining the torque is implemented in the motor control unit without using another system such as the vehicle control unit, thereby reducing a signal transmission latency and improving a speed of determining a final output torque. The motor control unit 50 can improve an intelligent characteristic of the powertrain 30, and decouple hardware protection of the powertrain 30 from vehicle performance calibration. The capability of the differential does not need to be handed over to a vehicle system research and development manufacturer for recalibration of system software, and a hardware provider can directly perform protection at a hardware level.

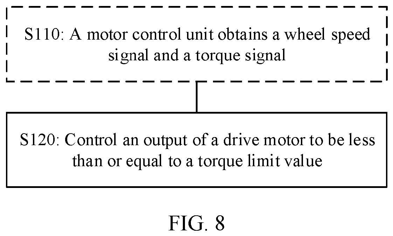

FIG. 8 is a diagram of a control method for a motor control unit according to this application.

The control method is applied to an electric vehicle 10. The electric vehicle 10 includes a power battery 20 and the powertrain 30 described above.

As shown in FIG. 8, the method may include the following step:
S120: Control an output of a drive motor to be less than or equal to a torque limit value.

A drive current is used to control the drive motor 60 to output a torque, and the torque is transferred to a left wheel and a right wheel of the electric vehicle separately through the differential 70.

In response to that a wheel speed difference between the two wheels being a first wheel speed difference, the output torque of the drive motor 60 is controlled to be less than or equal to a first limit value, where the first limit value corresponds to the first wheel speed difference; and in response to that the wheel speed difference between the two wheels increasing from the first wheel speed difference to a second wheel speed difference, the torque output by the drive motor 60 is controlled to be reduced to be less than or equal to a second limit value, where the second limit value corresponds to the second wheel speed difference, the first wheel speed difference is less than the second wheel speed difference, and the first limit value is greater than the second limit value.

In a possible implementation, when the wheel speed difference between the left wheel and the right wheel of the electric vehicle 10 is the first wheel speed difference, in response to that a torque value indicated by a torque signal being greater than the first limit value, where the first limit value corresponds to the first wheel speed difference, the control apparatus 51 controls the inverter circuit 52 to output a current, where the current controls the torque value output by the drive motor 60 to be less than the first limit value.

The torque limit value decreases as the wheel speed difference increases.

For descriptions related to the method execution process, refer to the foregoing description. Details are not described herein again.

Optionally, the method may further include the following step:
S110: Obtain a wheel speed signal and a torque signal.

The wheel signal includes a rotation speed of the left wheel and a rotation speed of the right wheel, or includes the wheel speed difference between the left wheel and the right wheel. The torque signal comes from the vehicle control unit or the electronic stability program.

Optionally, the motor control unit 50 may further obtain other vehicle information such as a steering wheel signal, a wheel speed, a wheel acceleration, and a wheel lateral slip rate.

In a possible implementation, the torque signal may be determined by the vehicle control unit 40 based on a travel of a drive pedal, or the torque signal may be determined by the traction control system TCS based on a running state of the vehicle.

Based on the solution of this application, the motor control unit 50 controls an extreme boundary of the differential, so that the differential is protected from a hardware failure caused by an excessively large coupling torque due to an excessively large speed difference, and this is conducive to protection of the differential by the powertrain 30. The motor control unit 50 can particularly protect running of a performance vehicle, a large vehicle, and an off-road vehicle.

This application further provides an electric vehicle 10.

The electric vehicle 10 includes the vehicle control unit 40 and the powertrain described above.

The vehicle control unit is configured to: in response to that a wheel speed difference between two wheels being less than or equal to a preset fourth wheel speed difference, output a torque signal to the powertrain, where the torque signal is determined based on a travel of a drive pedal and/or a brake pedal.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the above-described apparatus embodiment is merely an example. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A powertrain with a differential protection function, wherein the powertrain comprises a drive motor, a motor control unit, and a differential, the drive motor is configured to drivingly connect to the differential, the differential is configured to drivingly connect to two wheels of an electric vehicle separately, the two wheels are two front wheels or two rear wheels, and the motor control unit is configured to:
decrease a torque limit value output by the drive motor as a wheel speed difference between the two wheels increases; and
control a torque value output by the drive motor to be less than or equal to the torque limit value.

2. The powertrain according to claim 1, wherein the motor control unit is configured to:
in response to that a torque indicated by a torque signal being less than or equal to the torque limit value, control the drive motor to output the torque indicated by the torque signal; or
in response to that the torque indicated by the torque signal being greater than the torque limit value, control the torque value output by the drive motor to be equal to the torque limit value.

3. The powertrain according to claim 1 or 2, wherein the motor control unit is configured to:
in response to that the torque value output by the drive motor being greater than the torque limit value, control the drive motor to reduce the output torque value to be less than or equal to the torque limit value.

4. The powertrain according to any one of claims 1 to 3, wherein in a process in which the motor control unit is configured to control the drive motor to reduce the output torque value, the motor control unit is configured to:
in response to an increase in the wheel speed difference between the two wheels, control the drive motor to reduce the output torque value.

5. The powertrain according to any one of claims 1 to 4, wherein the motor control unit is configured to:
in response to that the wheel speed difference between the two wheels being a first wheel speed difference, control the torque value output by the drive motor to be less than or equal to a first limit value, wherein the first limit value corresponds to the first wheel speed difference; and
in response to that the wheel speed difference between the two wheels being a second wheel speed difference, control the torque value output by the drive motor to be less than or equal to a second limit value, wherein the second limit value corresponds to the second wheel speed difference, wherein
the first wheel speed difference is less than the second wheel speed difference, and the first limit value is greater than the second limit value.

6. The powertrain according to claim 5, wherein the motor control unit is configured to:
in response to that the wheel speed difference between the two wheels being less than a preset third wheel speed difference, control the drive motor to output the torque value indicated by the torque signal, wherein the third wheel speed difference is less than the first wheel speed difference.

7. The powertrain according to claim 6, wherein the motor control unit is configured to:
in response to that the wheel speed difference between the two wheels being less than or equal to a fourth wheel speed difference, control, based on the torque signal from a vehicle control unit, the drive motor to output a torque, wherein the fourth wheel speed difference is less than the first wheel speed difference and is greater than the third wheel speed difference.

8. The powertrain according to claim 7, wherein the motor control unit is configured to:
in response to that the wheel speed difference between the two wheels being greater than the fourth wheel speed difference, control, based on the torque signal from a traction control system, the drive motor to output a torque.

9. A control method for a powertrain, wherein the powertrain comprises a drive motor, a motor control unit, and a differential, the drive motor is configured to drivingly connect to the differential, the differential is configured to drivingly connect to two wheels of an electric vehicle separately, the two wheels are two front wheels or two rear wheels, and in a traveling process of an electric vehicle, the control method comprises:
decreasing a torque limit value output by the drive motor as a wheel speed difference between the two wheels increases; and
controlling a torque value output by the drive motor to be less than or equal to the torque limit value.

10. The control method according to claim 9, wherein the control method comprises:
in response to that a torque indicated by a torque signal being less than or equal to the torque limit value, controlling the drive motor to output the torque indicated by the torque signal; or
in response to that the torque indicated by the torque signal being greater than the torque limit value, controlling the torque value output by the drive motor to be equal to the torque limit value.

11. The control method according to claim 9 or 10, wherein the control method comprises:
in response to that the torque value output by the drive motor being greater than the torque limit value, controlling the drive motor to reduce the output torque value to be less than or equal to the torque limit value; and
in a process of controlling the drive motor to reduce the output torque value, in response to an increase in the wheel speed difference between the two wheels, controlling the drive motor to reduce the output torque value.

12. The control method according to any one of claims 9 to 11, wherein the control method comprises:
in response to that the wheel speed difference between the two wheels being a first wheel speed difference, controlling the output torque of the drive motor to be less than or equal to a first limit value, wherein the first limit value corresponds to the first wheel speed difference; and
in response to that the wheel speed difference between the two wheels increasing from the first wheel speed difference to a second wheel speed difference, controlling the torque output by the drive motor to be reduced to be less than or equal to a second limit value, wherein the second limit value corresponds to the second wheel speed difference, wherein
the first wheel speed difference is less than the second wheel speed difference, and the first limit value is greater than the second limit value.

13. The control method according to claim 12, wherein the control method comprises:
in response to that the wheel speed difference between the two wheels being less than a preset third wheel speed difference, controlling the drive motor to output the torque value indicated by the torque signal, wherein the third wheel speed difference is less than the first wheel speed difference.

14. The control method according to claim 13, wherein the control method comprises:
in response to that the wheel speed difference between the two wheels being less than or equal to a fourth wheel speed difference, controlling, based on the torque signal from a vehicle control unit, the drive motor to output a torque; and
in response to that the wheel speed difference between the two wheels being greater than the fourth wheel speed difference, controlling, based on the torque signal from a traction control system, the drive motor to output a torque, wherein the fourth wheel speed difference is less than the first wheel speed difference and greater than the third wheel speed difference.

15. An electric vehicle, wherein the electric vehicle comprises wheels, wheel speed sensors, a traction control system, a vehicle control unit, and the powertrain according to any one of claims 1 to 8, and the wheel speed sensor is configured to detect rotation speeds of the wheels, wherein
the motor control unit is configured to receive a rotation speed signal sent by the wheel speed sensor;
the vehicle control unit is configured to: receive a travel signal of an acceleration pedal, and output a torque signal to the motor control unit based on a torque value indicated by the travel signal; and
the traction control system is configured to output a torque signal to the motor control unit.
